Europäisches Patentamt

European Patent Office

Office européen des brevets

(11) Veröffentlichungsnummer: **0 251 081 B1**

(12) # EUROPÄISCHE PATENTSCHRIFT

(45) Veröffentlichungstag der Patentschrift: **06.05.92**

(51) Int. Cl.⁵: **C09J 161/30**, C08G 12/38

(21) Anmeldenummer: **87108844.9**

(22) Anmeldetag: **20.06.87**

(54) **Pulverförmiges Aminoplastleimharz für Holzwerkstoffe mit geringer Formaldehydabspaltung, Verfahren zu seiner Herstellung und konfektioniertes, pulverförmiges Aminoplastleimharz.**

(30) Priorität: **21.06.86 DE 3620855**

(43) Veröffentlichungstag der Anmeldung:
**07.01.88 Patentblatt 88/01**

(45) Bekanntmachung des Hinweises auf die
Patenterteilung:
**06.05.92 Patentblatt 92/19**

(84) Benannte Vertragsstaaten:
**AT BE DE FR GB IT NL SE**

(56) Entgegenhaltungen:
**EP-A- 0 062 389**
**DE-A- 1 048 406**
**US-A- 4 410 685**
**US-A- 4 536 245**

(73) Patentinhaber: **BASF Aktiengesellschaft**
**Carl-Bosch-Strasse 38**
**W-6700 Ludwigshafen(DE)**

(72) Erfinder: **Diem, Hans, Dr.**
**Kniebisstrasse 16**
**W-6800 Mannheim 1(DE)**
Erfinder: **Kraus, Friedrich, Dr.**
**Volkerstrasse 33**
**W-6140 Bensheim(DE)**
Erfinder: **Matthias, Guenther, Dr.**
**Meergartenweg 25a**
**W-6710 Frankenthal(DE)**
Erfinder: **Maurer, Bruno**
**Trifelsstrasse 5**
**W-6701 Dannstadt-Schauernheim(DE)**
Erfinder: **Wittmann, Otto**
**Max-Beckmann-Strasse 13b**
**W-6710 Frankenthal(DE)**

**Beschreibung**

Die Erfindung betrifft ein pulverförmiges Aminoplastleimharz für Holzwerkstoffe mit geringer Formaldehydabspaltung, insbesondere für die Herstellung von Spanplatten, für Flächenverleimungen oder als Papierklebemittel, ein Verfahren zur Herstellung des Aminoplastleimharzes, sowie ein fertig konfektioniertes Aminoplastleimharz.

Pulverförmige Leimharze sind dann wichtig, wenn die Transportkosten für wäßrige Leimharzlösungen zu hoch sind im Vergleich mit den Kosten einer Sprühtrocknung. In den letzten Jahren sind allgemein formaldehydarme Leimharze immer wichtiger geworden, insbesondere für die Herstellung von Spanplatten. Der Grund ist eine gewisse Belästigung durch den stechenden Geruch von Formaldehyd und bei höheren Konzentrationen das Auftreten von Reizerscheinungen. Die Herstellung formaldehydarmer Aminoharze in Pulverform ist sehr schwierig und bis heute ein ungelöstes Problem gewesen. Dafür gibt es zwei Gründe: Erstens enthalten formaldehydarme Leimharzlösungen Komponenten, die an der Sprühtrocknerwand ankleben, schmelzen, herunterlaufen oder auf den Filtern ankleben, diese verstopfen und nach kurzer Zeit dadurch einen starken Druckanstieg bewirken, der zum Abbruch der Produktion führt. Aber selbst bei Inkaufnahme dieses Nachteils führt die Anklebung der formaldehydarmen Pulverbestandteile zu einer Trennung in formaldehydreiche und -arme Komponenten und man erreicht nicht das Ziel der Formaldehydarmut im fertigen Produkt. Auch die Vermischung von formaldehydreichen mit formaldehydarmen Komponenten, im äußersten Fall mit Harnstoff, führt nicht zu einem handhabbaren Pulverharz, da diese Mischung nicht lagerstabil ist und letztlich zu schwierig aufzulösenden Festkörpern führt. Eine weitere Schwierigkeit entsteht aus der mangelhaften Klebkraft von sehr formaldehydarmen Leimharzen. Bei Flüssigharzen wird dieses Problem durch spezielle Kondensationstechniken gelöst, indem man bei hohen Formaldehydgehalten, d.h. hohen Molverhältnissen Formaldehyd zu Harnstoff beginnt und im Verlaufe der Kondensation durch stufenweise Zugabe von Harnstoff immer weiter im Molverhältnis hinabsteigt. Bei höheren Ansprüchen bezüglich Festigkeit und Quellbeständigkeit modifiziert man das Harz mit Melamin. Dabei werden diese Harze, ob modifiziert oder nicht, mit Alkoholen umgesetzt, wobei man annimmt, daß ein Teil der Hydroxymethylgruppen unter Wasserabspaltung verethert wird. Diese stufenweise Absenkung des Molverhältnisses ist aus obigen Gründen bei der Sprühtrocknung der zu trocknenden Harzlösung nicht durchführbar. Auch die gemeinsame Trocknung aller Harz-Komponenten eines Melaminharzes bessert das Problem nicht.

Der Erfindung liegt die Aufgabe zugrunde, ein pulverförmiges Aminoplastleimharz für Holzwerkstoffe mit geringer Formaldehydabspaltung, und ein Verfahren zu seiner Herstellung bereitzustellen.

Diese Aufgabe wird gelöst mit einem pulverförmigen Aminoplastleimharz, das dadurch gekennzeichnet ist, daß das Harz eine Mischung aus

a) 40 bis 90 Gew.-Teilen eines Harnstoff-Formaldehydharzes mit einem molaren Verhältnis von Harnstoff : Formaldehyd von 1:1,4 bis 1:2;

b) 2 bis 20 Gew.-Teilen Melamin, das gegebenenfalls teilweise oder vollständig mit der Harnstoff-Formaldehydharzkomponenten reagiert hat;

c) 2 bis 20 Gew.-Teilen Harnstoff; und

d) gegebenenfalls 0,1 bis 10 Gew.-Teilen eines Mittels zur Erhöhung der Lagerstabilität;

sowie bis zu 10 Gew.-Teilen Wasser und gegebenenfalls bis zu 10 Gew.-Teilen an anderen Zusätzen,

ist, wobei sich die Gewichtsteile der Komponenten zu einem Wert von 100 addieren.

Nach einer bevorzugten Ausführungsform ist das pulverförmige Aminoplastleimharz, dadurch gekennzeichnet, daß es eine Mischung aus

a) 40 bis 90 Gew.-Teilen eines Harnstoff-Formaldehydharzes mit einem molaren Verhältnis von Harnstoff : Formaldehyd von 1:1,4 bis 1:1,8;

b) 2 bis 20 Gew.-Teilen Melamin;

c) 2 bis 20 Gew.-Teilen Harnstoff; und

d) gegebenenfalls 0,1 bis 10 Gew.-Teilen eines Mittels zur Erhöhung der Lagerstabilität;

sowie bis zu 10 Gew.-Teilen Wasser und gegebenenfalls bis zu 10 Gew.-Teilen an anderen Zusätzen ist.

Nach einer besonders bevorzugten Ausführungsform weist das Harnstoff-Formaldehydharz ein molares Verhältnis von Harnstoff : Formaldehyd von etwa 1:1,6 auf.

Nach einer besonders zweckmäßigen Ausgestaltung der Erfindung enthält das Aminoplastleimharz Mittel zur Erhöhung der Lagerstabilität. Besonders bevorzugt ist hierbei die Verwendung von Kieselsäure, insbesondere von hydrophober Kieselsäure, wie sie beispielsweise unter der Handelsbezeichnung Sipernat® D17 vertrieben wird. Besonders zweckmäßig enthält das Aminoplastleimharz die Kieselsäure in einer Menge von 0,1 bis 2 Gew.-Teilen, insbesondere von 0,5 bis 1,5 Gew.-Teilen. Besonders bevorzugt ist die Verwendung von ungefähr 1 Gew.-Teilen Sipernat® D17, bezogen auf 100 Gew.-Teile Aminoplastleimharz.

Als besonders vorteilhaft hat es sich herausgestellt, wenn das pulverförmige Aminoplastleimharz als Zusatz ein lösliches Sulfit oder Hydrogensulfit in einer Menge von 0,2 bis 2 Gew.-Teilen, bezogen auf die Gesamtmenge der Harzkomponenten, enthält. Besonders zweckmäßig handelt es sich hierbei um ein Alkali- oder Ammoniumsulfit oder -hydrogensulfit. Besonders bevorzugt verwendet man das Natriumsalz $Na_2SO_3$. Ein bevorzugter Bereich für die Menge an Sulfit oder Hydrogensulfit liegt zwischen 0,5 und 1 Gew.-Teilen, insbesondere bei etwa 0,7 Gew.-Teilen, bezogen auf die Gesamtmenge der Harzkomponenten. Das Sulfit oder Hydrogensulfit kann in Pulverform oder in Lösung zugesetzt werden.

Die Zugabe des Sulfits oder Hydrogensulfits führt zu einem Absenken der Viskosität der aus dem Leimpulver bereiteten Lösungen, so daß diese leichter handhabbar werden. Überdies wird die Wassermischbarkeit des Aminoplastharzes erhöht, schließlich ist es nicht erforderlich, bei der Herstellung der zu trocknenden Harzlösung bei Zusatz von Sulfit oder Hydrogensulfit den pH-Wert des Harzleimansatzes beim Zufügen von Harnstoff zur Harzlösung stetig nachzustellen.

Das erfindungsgemäße Verfahren zur Herstellung des Aminoplastleimharzes ist dadurch gekennzeichnet, daß man das Melamin pulverförmig in eine Lösung des Harnstoff-Formaldehydharzes einrührt, Harnstoff zugibt und die Lösung sprühtrocknet. Unmittelbar nach dem Sprühtrocknen kann man das Mittel zur Erhöhung der Lagerstabilität zumischen. In diesem Fall darf das Harzpulver auch noch warm sein. Die Zumischung erfordert keine eigene Mischanlage, denn das Mittel zur Erhöhung der Lagerstabilität kann beispielsweise in der Abfüllanlage für das Aminoplastleimharz zugegeben werden. Die Abfüllanlage ist dem Sprühtrockner nachgeschaltet.

Nach einer bevorzugten Ausführungsform des erfindungsgemäßen Verfahrens gibt man den Harnstoff in Form einer wäßrigen Lösung zur Lösung des Harnstoff-Formaldehydharzes.

Das erfindungsgemäße Verfahren ist besonders vorteilhaft, weil nur ein einziger Sprühtrocknungsvorgang für alle Komponenten des Harzes erforderlich ist. Da eine getrennte Trocknung der Komponenten vermieden wird, entfällt auch eine getrennte Lagerung der getrockneten Komponenten und ein anschließendes Vermischen desselben, wofür man Mischvorrichtungen benötigen würde. Hierdurch wird Personal eingespart, auch entfällt eine besondere Kontrolle der Mischungsgüte, die im Falle einer getrennten Trocknung der Komponenten nötig wäre, da zu langes Mischen teuer und zu kurzes Mischen für die Produktqualität nachteilig sind.

An sich wäre zu erwarten, daß der nicht umgesetzte Harnstoff, der einen Schmelzpunkt von 131 °C aufweist, schmierig an der heißen Sprühtrocknerwand anklebt und nicht bis in die Filter gelangt. Überraschenderweise tritt dieser unerwünschte Effekt nicht ein, wenn man vor der Sprühtrocknung der Harnstoff-Formaldehydharzlösung nach Zugabe des Harnstoffs, vorteilhaft als Harnstofflösung, pulverförmiges Melamin zugibt. Offensichtlich hindert das Melamin den Harnstoff daran, schmierig an der Turmwand des Sprühtrockners herunterzulaufen. Dieser Effekt ist bislang nicht beobachtet worden. Er ist erfindungswesentlich, da er die Herstellung des erfindungsgemäßen Aminoplastleimharzes nach dem erfindungsgemäßen Verfahren ermöglicht.

An sich wäre zu erwarten gewesen, daß der Harnstoff durch Melamin zu einem leichteren Anschmelzen an der Turmwand gebracht wird, da man von vornherein mit einer Schmelzpunkterniedrigung rechnen mußte. Eine derartige Schmelzpunkterniedrigung tritt jedoch offensichtlich nicht auf.

Ferner wäre zu erwarten gewesen, daß der zugeführte Harnstoff mit dem Harnstoff-Formaldehydharz reagiert, da bei einer Trockenturmtemperatur von weit über 100 °C die Reaktionsgeschwindigkeit des Harzes stark erhöht ist.

Schließlich war nicht zu erwarten, daß sich erhöhte Mengen an Melamin in der wäßrigen Aminoplastleimharz auflösen würden. So lösen sich beispielsweise 725 Teile Melamin in 5053 Teilen Wasser und 5053 Teilen gelöstem Harz (50 %ige Festharzlösung), so daß eine 15 %ige wäßrige Melaminlösung vorliegt. In kaltem Wasser beträgt die Löslichkeit des Melamins weniger als 1 %.

Das erfindungsgemäße Verfahren erlaubt eine technisch einwandfreie Sprühtrocknung mit einer Kapazität, wie sie sonst nur bei reinen Harnstoffharzen ohne freien Harnstoff beobachtet wird.

Das erfindungsgemäße Aminoplastleimharz erlaubt die Herstellung einwandfreier Spanplatten mit niedriger Formaldehydemission.

Die Erfindung betrifft auch ein konfektioniertes pulverförmiges Aminoplastleimharz, enthaltend ein pulverförmiges Aminoplastleimharz der zuvor definierten Art. Ein derartiges konfektioniertes, pulverförmiges Aminoplastleimharz ist bereits mit einem Härter gemischt und kann so ansatzfertig gelagert und ausgeliefert werden. Gewünschtenfalls enthält das konfektionierte pulverförmige Aminoplastleimharz auch einen Fugenfüller, beispielsweise ein Mehl.

Gegenstand der Erfindung ist ferner eine Abmischung aus dem wie zuvor definierten Aminoplastleimharz und anderen, üblichen Klebemitteln. Unter üblichen Klebemitteln sind beispielsweise organische Klebstoffe natürlichen oder synthetischen Ursprungs gemeint.

Das erfindungsgemäße Aminoplastleimharz oder dessen Abmischungen kann zur Herstellung lignocellulosehaltiger Werkstoffe, so beispielsweise auch als Papierklebemittel dienen. Hierunter versteht man ein Klebemittel für Papier, Kraftpapier, Karton, Wellpappe und vergleichbare Werkstoffe.

Der im konfektionierten pulverförmigen Aminoplastleimharz verwendete Härter muß so beschaffen sein, daß er nicht mit der pulverförmigen Harzmischung reagiert, sondern erst in der wäßrigen Leimflotte bzw. in dem Holzwerkstoff, der Spanplatte oder Furnierplatte, den Härtungsvorgang bewirkt. Geeignete Härter lassen sich ohne weiteres unter den bekannten Härtern des Standes der Technik auswählen. Besonders geeignete Beispiele für derartige Härter sind: Ammoniumsalze starker anorganischer Säuren, gegebenenfalls gemischt mit Mehlen, Stärke, Kaolin, hochkondensierten Leimharzen auf Basis Harnstoff oder Melamin, pulverförmige organische Säure wie Melaminsäure, Fumarsäure, Zitronensäure, Weinsäure, Stearinsäure, pulverisierte Nußschalen, Kokosnußschalen, Olivenkerne.

Die Erfindung wird durch die nachstehenden Beispiele weiter erläutert.

Beispiel 1

In einen Rührkesselreaktor ein Vorkondensat aus 2 444,4 kg FA (Formaldehyd) 100 % und 1 222,5 kg Harnstoff fest, gelöst in 2 444,9 kg Wasser, eingefüllt, 1 210 kg Wasser und 1 000 l Formaldehyd 40 % = 442,5 kg FA 100 % zugegeben. Nach Zufügen weiterer 1 820 l einer 68,9 %igen Harnstoff-Lösung = 1 455,0 kg Harnstoff 100 % wurde die Lösung auf 96 °C erwärmt, bei dieser Temperatur 10 Minuten belassen und anschließend der pH-Wert mit 10 %iger Ameisensäure auf 6,4 gebracht. Nach einer Kondensationszeit von ca. 45 Minuten wurde eine Trübungstemperatur einer 1:8 mit Wasser verdünnten Lösung von 15 °C erreicht. In dieser Zeit fiel der pH-Wert auf 5,1. Danach wurden weitere 1 180 l einer 68,9 %igen Harnstofflösung = 943,3 kg Harnstoff 100 % zugefügt und weiterkondensiert bei pH 5,3, bis eine Trübungstemperatur einer 1:8 mit Wasser verdünnten Lösung von 42 °C erreicht war.

Es wurden 50,3 kg Na$_2$SO$_3$ in der Lösung aufgelöst. Dabei wurde ein pH-Wert von 9,8 erreicht. Dann wurden in die 96 °C warme Lösung 775 kg Melamin eingerührt. Nach ca. 2 Minuten war das Melamin vollständig gelöst, wobei die Lösung milchig wurde.

Nach weiterer Zugabe von 1 020 l einer 68,9 %igen Harnstofflösung = 815,4 kg Harnstoff 100 % wurde noch 60 Minuten bei 90 °C gerührt. Dabei fiel der pH-Wert nur geringfügig ab.

Anschließend wurde die Lösung auf 40 °C abgekühlt. Der Feststoffgehalt betrug 53,5 % (ermittelt durch Trocknen 2 h bei 120 °C). Es fiel kein Melamin aus, obwohl die Löslichkeit bei 40 °C überschritten war.

Nach 12-stündigem Stehen wurde die Lösung sprühgetrocknet. Bei einer Turmausgangstemperatur von 93 °C wurden stündlich 1 253 kg Pulver mit einer Restfeuchte von ca. 1 % erhalten. Das Pulver wurde unmittelbar nach dem Ablaufen aus dem Turm mit 12,5 kg Sipernat D 17 gemischt. Das Pulver hatte einen Natriumsulfitgehalt von 0,7 %.

Die 2:1-Lösung in Wasser hatte folgende Eigenschaften:
pH 8,6
Viskosität 20 °C 1 250 mPas
Gelierzeit bei 70 °C mit 10 % Härter einer 15 %igen NH$_4$Cl-Lösung 30 Minuten
662 Teile einer Mischung von 2 Teilen dieses Pulvers und 1 Teil Wasser wurden mit 66 Teilen einer 20 %igen Ammoniumchloridlösung und 72 Teilen Wasser zu einer Leimflotte angesetzt. Die Gelierzeit der Flotte bei 100 °C betrug 163 Sekunden. Fichtenspäne wurden mit soviel Flotte gemischt, daß die Spänemischung 8 % Festharz enthielt. Die Späne wurden bei 180 °C und mit 4 Minuten Preßzeit zu einer Spanplatte von 18,2 mm Dicke gepreßt.

Die Prüfung ergab:
Dichte 684 kg/m$^3$
Scherfestigkeit: 2,0 N/mm$^2$
Quellung nach 2 Stunden: 24,2 %
Quellung nach 24 Stunden: 28,5 %
Formaldehydabgabe (FESYP): 5,3 mg HCOH/100 g atro (absolut trockene) Platte

Beispiel 2

In einen Rührkesselreaktor wurde ein Vorkondensat aus 2 444,4 kg FA 100 % und 1 222,5 kg Harnstoff fest, gelöst in 2 444,9 kg Wasser, eingefüllt, 1 210 kg Wasser, 232 l Ammoniakwasser 25 %ig = 73,2 kg Ammoniak 100 % und 1 000 l Formaldehyd 40 % = 442,5 kg FA 100 % zugegeben. Nach Zufügen weiterer 1 820 l einer 68,9 %igen Harnstofflösung = 1 455,0 kg Harnstoff 100 % wurde die Lösung auf 96 °C erwärmt, bei dieser Temperatur 10 Minuten belassen und anschließend der pH-Wert mit 10 %iger Ameisensäure auf 6,4 gebracht. Nach einer Kondensationszeit von ca. 45 Minuten wurde eine Trübungstemperatur einer 1:8 mit Wasser verdünnten Lösung von 15 °C erreicht. In dieser Zeit fiel der pH-Wert auf 5,1. Danach wurden weitere 1 180 l einer 68,9 %igen Harnstofflösung = 943,3 kg Harnstoff 100 % zugefügt und weiterkondensiert bei pH 5,3, bis eine Trübungstemperatur einer 1:8 mit Wasser verdünnten Lösung von 42 °C erreicht war.

Mit 25 %iger NaOH wurde dann ein pH-Wert von 9,3 eingestellt und in die 96 °C warme Lösung 775 kg Melamin eingerührt. Nach ca. 2 Minuten war das Melamin vollständig gelöst und die Lösung wurde 30 Minuten bei ca. 90 °C gerührt. Die Lösung ging hierbei in ein milchiges Aussehen über, wobei der pH-Wert auf ca. 7,6 absank.

Nach weiterer Zugabe von 1 020 l einer 68,9 %igen Harnstofflösung = 815 kg Harnstoff 100 % wurde noch 30 Minuten bei 85°C gerührt. Dabei fiel der pH-Wert auf 7,0 ab.

Anschließend wurde die Lösung auf 40°C abgekühlt. Der Feststoffgehalt betrug 52,5 % (ermittelt durch Trocknen 2 h bei 120°C). Es fiel kein Melamin aus, obwohl die Löslichkeit bei 40°C überschritten war.

Nach 12stündigem Stehen wurde die Lösung sprühgetrocknet. Bei einer Turmausgangstemperatur von 93°C wurden stündlich 1 253 kg Pulver mit einer Restfeuchte von ca. 1 % erhalten. Das Pulver wurde unmittelbar nach dem Ablaufen aus dem Turm mit 12,5 kg Sipernat D 17 gemischt.

Die 2:1-Lösung in Wasser hatte folgende Eigenschaften:

pH 7,6

Viskosität 20°C 4 000 mPas

Gelierzeit bei 70°C mit 10 % Härter einer 15 %igen $NH_4$ Cl-Lösung 32 Minuten

662 Teile einer Mischung von 2 Teilen dieses Pulvers und 1 Teil Wasser wurden mit 66 Teilen einer 20 %igen Ammoniumchloridlösung und 72 Teilen Wasser zu einer Leimflotte angesetzt. Die Gelierzeit der Flotte bei 100°C betrug 163 Sekunden. Fichtenspäne wurden mit soviel Flotte gemischt, daß die Spänemischung 8 % Festharz enthielt. Die Späne wurden bei 180°C und mit 4 Minuten Preßzeit zu einer Spanplatte von 18,2 mm Dicke gepreßt.

Die Prüfung ergab:

Dichte 645 kg/m³

Scherfestigkeit: 1,80 N/mm²

Quellung nach 2 Stunden: 26,7 %

Quellung nach 24 Stunden: 30,9 %

Formaldehydabgabe (FESYP): 6 mg HCOH/100 g atro (absolut trockene) Platte

## Patentansprüche

1. Pulverförmiges Aminoplastleimharz für Holzwerkstoffe mit geringer Formaldehydabspaltung, dadurch gekennzeichnet, daß das Harz eine Mischung aus

   a) 40 bis 90 Gew.-Teilen eines Harnstoff-Formaldehydharzes mit einem molaren Verhältnis von Harnstoff:Formaldehyd von 1:1,4 bis 1:2;

   b) 2 bis 20 Gew.-Teilen Melamin, das gegebenenfalls teilweise oder vollständig mit der Harnstoff-Formaldehydharzkomponente reagiert hat;

   c) 2 bis 20 Gew.-Teilen Harnstoff; und

   d) gegebenenfalls 0,1 bis 10 Gew.-Teilen eines Mittels zur Erhöhung der Lagerstabilität;

   sowie bis zu 10 Gew.-Teilen Wasser und gegebenenfalls bis zu 10 Gew.-Teilen an anderen Zusätzen,

ist, wobei sich die Gewichteile der Komponenten zu einem Wert von 100 addieren.

2. Pulverförmiges Aminoplastleimharz nach Anspruch 1, dadurch gekennzeichnet, daß es eine Mischung aus

   a) 40 bis 90 Gew.-Teilen eines Harnstoff-Formaldehydharzes mit einem molaren Verhältnis von Harnstoff:Formaldehyd von 1:1,4 bis 1:1,8;

   b) 2 bis 20 Gew.-Teilen Melamin;

   c) 2 bis 20 Gew.-Teilen Harnstoff; und

   d) gegebenenfalls 0,1 bis 10 Gew.-Teilen eines Mittels zur Erhöhung der Lagerstabilität;

   sowie bis zu 10 Gew.-Teilen Wasser und gegebenenfalls bis zu 10 Gew.-Teilen an anderen Zusätzen ist.

3. Pulverförmiges Aminoplastleimharze nach einem der Ansprüche 1 oder 2, dadurch gekennzeichnet, daß das Harnstoff-Formaldehydharz ein molares Verhältnis von Harnstoff:Formaldehyd von etwa 1:1,6 aufweist.

4. Pulverförmiges Aminoplastharz nach einem der Ansprüche 1 bis 3, dadurch gekennzeichnet, daß es als Mittel zur Erhöhung der Lagerstabilität Kieselsäure enthält.

5. Pulverförmiges Aminoplastharz nach Anspruch 4, dadurch gekennzeichnet, daß es hydrophobe Kieselsäure in einer Menge von 0,1 bis 2 Gew.-Teilen enthält.

6. Pulverförmiges Aminoplastleimharz nach einem der Ansprüche 1 bis 5, dadurch gekennzeichnet, daß es als Zusatz ein lösliches Sulfit oder Hydrogensulfit in einer Menge von 0,2 bis 2 Gew.-Teilen , bezogen auf die Gesamtmenge der Harzkomponenten, enthält.

7. Verfahren zur Herstellung des Aminoplastharzes nach einem der Ansprüche 1 bis 6, dadurch gekennzeichnet, daß man das Melamin pulverförmig in eine Lösung des Harnstoff-Formaldehydharzes einrührt, Harnstoff zugibt und die Lösung sprühtrocknet.

8. Verfahren nach Anspruch 7, dadurch gekennzeichnet, daß man unmittelbar nach dem Sprühtrocknen das Mittel zur Erhöhung der Lagerstabilität zumischt.

9. Verfahren nach einem der Ansprüche 7 oder 8, dadurch gekennzeichnet, daß man den Harnstoff in Form einer wäßrigen Lösung zugibt.

10. Pulverförmiges Aminoplastleimharz nach einem der Ansprüche 1 bis 6, erhältlich nach dem Verfahren gemäß einem der Ansprüche 7 bis 9.

11. Konfektioniertes pulverförmiges Aminoplastleimharz, enthaltend ein Aminoplastleimharz nach einem der Ansprüche 1 bis 6 und 10, einen Härter und gegebenenfalls andere, übliche Zuschläge.

12. Pulverförmiges Aminoplastharz nach einem der Ansprüche 1 bis 6 und 10 in Abmischung mit anderen, üblichen und mit dem Aminoplastleimharz verträglichen Klebemitteln.

## Claims

1. A pulverulent aminoplast adhesive resin for wood-base materials having a low formaldehyde emission, wherein the resin is a mixture of
   a) from 40 to 90 parts by weight of a urea/formaldehyde resin having a molar ratio of urea to formaldehyde of from 1:1.4 to 1:2,
   b) from 2 to 20 parts by weight of melamine, some or all of which may have been reacted with the urea/-formaldehyde resin component,
   c) from 2 to 20 parts by weight of urea and
   d) if required, from 0.1 to 10 parts by weight of an agent for increasing the shelf life,
   together with not more than 10 parts by weight of water and, if required, not more than 10 parts by weight of other additives, the numbers of parts by weight of the components summing to 100.

2. A pulverulent aminoplast adhesive resin as claimed in claim 1, wherein the resin is a mixture of
   a) from 40 to 90 parts by weight of a urea/formaldehyde resin having a molar ratio of urea to formaldehyde of from 1:1.4 to 1:1.8,
   b) from 2 to 20 parts by weight of melamine,
   c) from 2 to 20 parts by weight of urea and
   d) if required, from 0.1 to 10 parts by weight of an agent for increasing the shelf life,
   together with not more than 10 parts by weight of water and, if required, not more than 10 parts by weight of other additives.

3. A pulverulent aminoplast adhesive resin as claimed in claim 1 or 2, wherein the urea/formaldehyde resin has a molar ratio of urea to formaldehyde of about 1:1.6.

4. A pulverulent aminoplast resin as claimed in any of claims 1 to 3, which contains silica as an agent for increasing the shelf life.

5. A pulverulent aminoplast resin as claimed in claim 4, which contains hydrophobic silica in an amount of from 0.1 to 2 parts by weight.

6. A pulverulent aminoplast adhesive resin as claimed in any of claims 1 to 5, which contains, as an additive, a soluble sulfite or bisulfite in an amount of from 0.2 to 2 parts by weight, based on the total amount of the resin components.

7. A process for the preparation of a pulverulent aminoplast resin as claimed in any of claims 1 to 6, wherein powdered melamine is stirred into a solution of the urea/formaldehyde resin, urea is added and the solution is spray dried.

8. A process as claimed in claim 7, wherein the agent for increasing the shelf life is mixed in directly after the spray drying procedure.

9. A process as claimed in claim 7 or 8, wherein the urea is added in the form of an aqueous solution.

10. A pulverulent aminoplast adhesive resin as claimed in any of claims 1 to 6, obtainable by the process as claimed in any of claims 7 to 9.

11. A formulated pulverulent aminoplast adhesive resin containing an aminoplast adhesive resin as claimed in any of claims 1 to 6 and 10, a curing agent and, if required, other conventional additives.

12. A pulverulent aminoplast resin as claimed in any of claims 1 to 6 and 10, as a mixture with other, conventional adhesives which are compatible with the aminoplast adhesive resin.

## Revendications

1. Résine de collage aminoplaste, pulvérulente, pour des matériaux en bois, à faible séparation de formaldéhyde, caractérisé en ce que la résine est constituée d'un mélange de

a) 40 à 90 parties en poids d'une résine d'urée et de formaldéhyde avec un rapport molaire de l'urée au formaldéhyde de 1:1,4 à 1:2,

b) 2 à 20 parties en poids de mélamine, qui a éventuellement réagi, totalement ou en partie, avec le composant de résine d'urée et de formaldéhyde,

c) 2 à 20 parties en poids d'urée et

d) éventuellement 0,1 à 10 parties en poids d'un agent d'augmentation de la stabilité à la conservation,

comme aussi jusqu'à 10 parties en poids d'eau et éventuellement jusqu'à 10 parties en poids d'autres additifs,

où les parties en poids des composants s'additionnent pour former une valeur de 100.

2. Résine de collage aminoplaste, pulvérulente, selon la revendication 1, caractérisée en ce qu'elle est constituée d'un mélange de

a) 40 à 90 parties en poids d'une résine d'urée et de formaldéhyde avec un rapport molaire de l'urée au formaldéhyde de 1:1,4 à 1:1,8.

b) 2 à 20 parties en poids de mélamine,

c) 2 à 20 parties en poids d'urée et

d) éventuellement 0,1 à 10 parties en poids d'un agent d'augmentation de la stabilité à la conservation,

comme aussi jusqu'à 10 parties en poids d'eau et éventuellement jusqu'à 10 parties en poids d'autres additifs.

3. Résine de collage aminoplaste, pulvérulente, selon l'une des revendications 1 et 2, caractérisée en ce que la résine d'urée et de formaldéhyde présente un rapport molaire de l'urée au formaldéhyde d'environ 1:1,6.

4. Résine aminoplaste, pulvérulente, selon l'une des revendications 1 à 3, caractérisée en ce qu'elle contient de l'acide silicique à titre d'agent d'augmentation de la stabilité à la conservation.

5. Résine aminoplaste, pulvérulente, selon la revendication 4, caractérisée en ce qu'elle contient de l'acide silicique hydrophobe en une proportion de 0,1 à 2 parties en poids.

6. Résine de collage aminoplaste, pulvérulente, selon l'une des revendications 1 à 5, caractérisée en ce qu'elle contient, à titre d'additif, un hydrogénosulfite ou un sulfite, soluble, en une proportion de 0,2 à 2 parties en poids, par rapport à la quantité totale des composants de la résine.

7. Procédé de fabrication d'une résine aminoplaste selon l'une quelconque des revendications 1 à 6, caractérisé en ce que l'on incorpore la mélamine à l'état pulvérulent dans une solution de la résine d'urée et de formaldéhyde sous agitation, on ajoute l'urée et on sèche la solution par pulvérisation.

8. Procédé suivant la revendication 7, caractérisé en ce que l'on ajoute l'agent d'augmentation de la stabilité à la conservation par mélange immédiatement après le séchage par pulvérisation.

9. Procédé suivant l'une des revendications 7 et 8, caractérisé en ce que l'on ajoute l'urée sous forme d'une solution aqueuse.

10. Résine de collage aminoplaste, pulvérulente, selon l'une quelconque des revendications 1 à 6, que l'on peut obtenir par mise en oeuvre du procédé selon l'une quelconque des revendications 7 à 9.

11. Résine de collage aminoplaste, pulvérulente, confectionnée, qui contient une résine de collage aminoplaste selon l'une quelconque des revendications 1 à 6 et 10, un durcisseur et éventuellement d'autres additifs ou adjuvants usuels.

12. Résine aminoplaste, pulvérulente, selon l'une quelconque des revendications 1 à 6 et 10, en mélange à d'autres colles usuelles, compatibles avec la résine de collage aminoplaste.